# EUROPEAN PATENT APPLICATION

(11) **EP 4 832 601 A1**
(43) Date of publication of application: **28.10.2026**
(21) Application number: 24908220.7
(22) Date of filing: 23.12.2024
(51) Int. Cl.: H04W 52/24, H04W 52/28, H04W 52/32, H04B 17/309, H04W 52/10, H04W 52/36, H04W 84/06

(54) **METHOD AND APPARATUS FOR CONTROLLING TRANSMISSION POWER OF AERIAL TERMINAL**

(30) Priority: 22.12.2023 KR 20230190098
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR); SEO, Hanbyul, Seoul 06772 (KR)
(74) Representative: Mooser, Sebastian Thomas
(86) International application number: PCT/KR2024/020973
(87) International publication number: WO 2025/135938

(57) **Abstract**

Proposed is a method for operating a first device (100) in a wireless communication system. The method comprises the steps of: acquiring a parameter for transmission power control; determining transmission power by performing the transmission power control on the basis of the parameter; and performing transmission by using the transmission power. The parameter may be determined on the basis of the altitude of a first device (100).

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method may be proposed. For example, the method may comprise: obtaining a parameter for a transmit power control; determining transmit power by performing the transmit power control based on the parameter; and performing a transmission by using the transmit power, wherein the parameter may be determined based on an altitude of a first device.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain a parameter for a transmit power control; determine transmit power by performing the transmit power control based on the parameter; and perform a transmission by using the transmit power, wherein the parameter may be determined based on an altitude of the first device.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: obtain a parameter for a transmit power control; determine transmit power by performing the transmit power control based on the parameter; and perform a transmission by using the transmit power, wherein the parameter may be determined based on an altitude of the first device.

According to an embodiment of the present disclosure, a non-transitory computer-readable storage medium storing instructions may be proposed. For example, the instructions, when executed, may cause a first device to: obtain a parameter for a transmit power control; determine transmit power by performing the transmit power control based on the parameter; and perform a transmission by using the transmit power, wherein the parameter may be determined based on an altitude of the first device.

According to an embodiment of the present disclosure, a method may be proposed. For example, the method may comprise: receiving, from a first device, a transmission, wherein the transmission may be transmitted based on transmit power determined by performing a transmit power control performed based on a parameter, and wherein the parameter may be determined based on an altitude of the first device.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, a transmission, wherein the transmission may be transmitted based on transmit power determined by performing a transmit power control performed based on a parameter, and wherein the parameter may be determined based on an altitude of the first device.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows maximum transmit power configured differently according to an altitude range of a UE according to an embodiment of the present disclosure.
FIG. 10 shows sounding reference signal resources configured per altitude of a UE according to an embodiment of the present disclosure.
FIG. 11 shows open-loop power control (e.g., OLPC) formulas and parameters configured differently according to an altitude range of a UE according to an embodiment of the present disclosure.
FIG. 12 shows transmit power control procedures configured differently according to an altitude range of a UE according to an embodiment of the present disclosure.
FIG. 13 shows a multi-pathloss-measurement-based power control procedure according to an embodiment of the present disclosure.
FIG. 14 shows a procedure of operations that may be performed by a first device according to an embodiment of the present disclosure.
FIG. 15 shows a procedure of operations that may be performed by a second device according to an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present specification may mean "for example." Specifically, when indicated as "control information (PDCCH)," "PDCCH" may be proposed as an example of "control information." In other words, "control information" in the present specification is not limited to "PDCCH," and "PDCCH" may be proposed as an example of "control information." In addition, even when indicated as "control information (e.g., PDCCH)," "PDCCH" may be proposed as an example of "control information."

In the following description, "when, if, in case of" may be replaced with "based on."

In the present specification, a device obtaining information may include that the information is (pre-)configured for the device, that the information is received by the device from another entity, and that the device generates the information.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

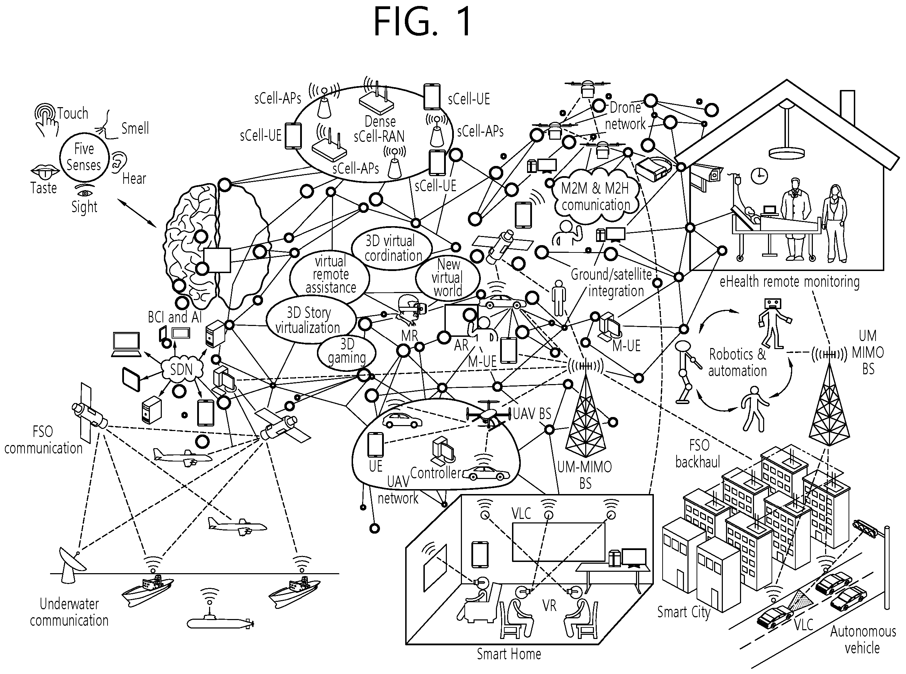

FIG. 1 shows a communication structure that can be provided in a 6G system, according to one embodiment of the present disclosure. The embodiment of FIG. 1 may be combined with various embodiments of the present disclosure.

In 6G, new network features may include the following.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

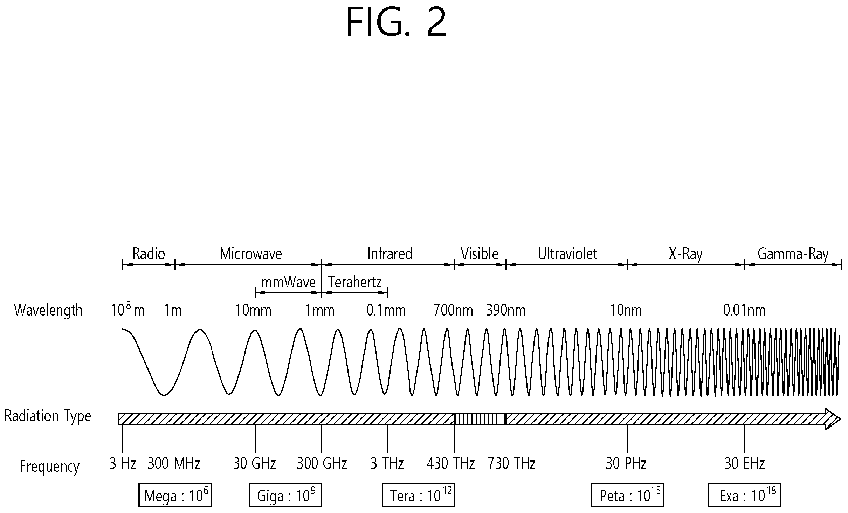

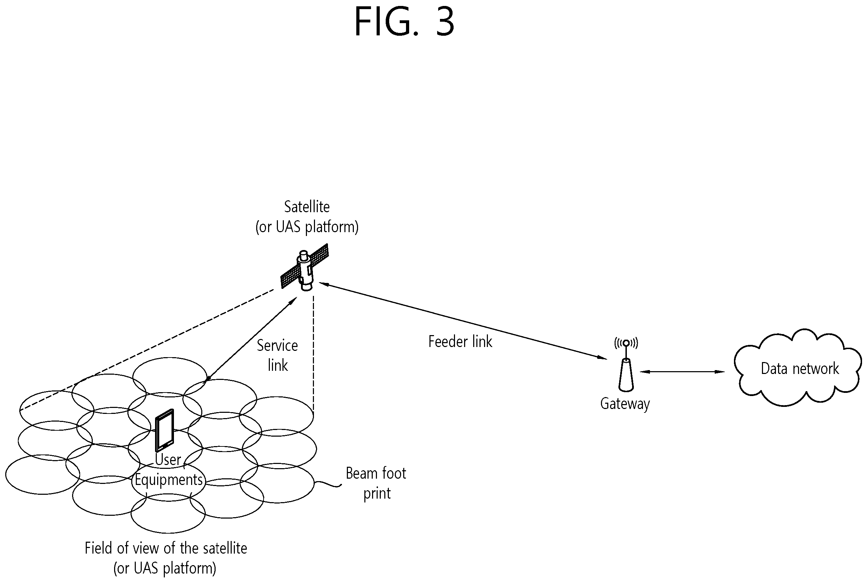

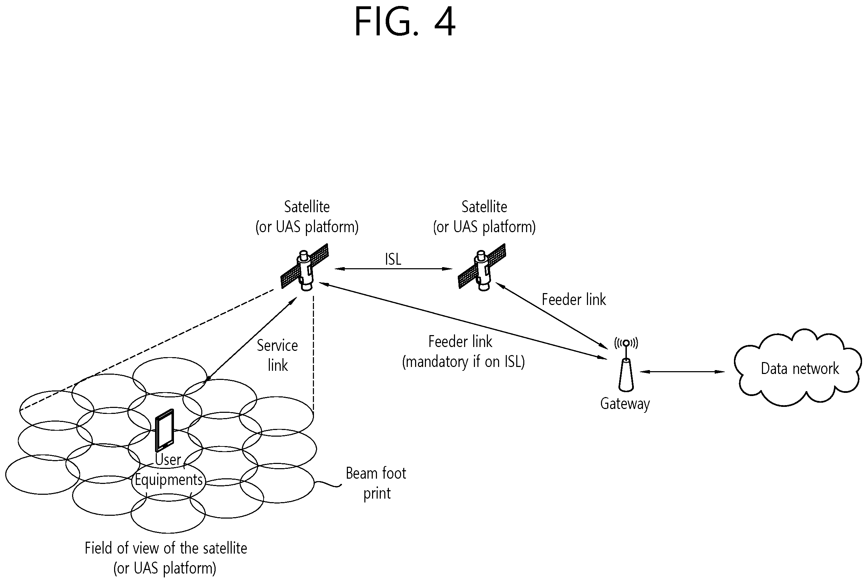

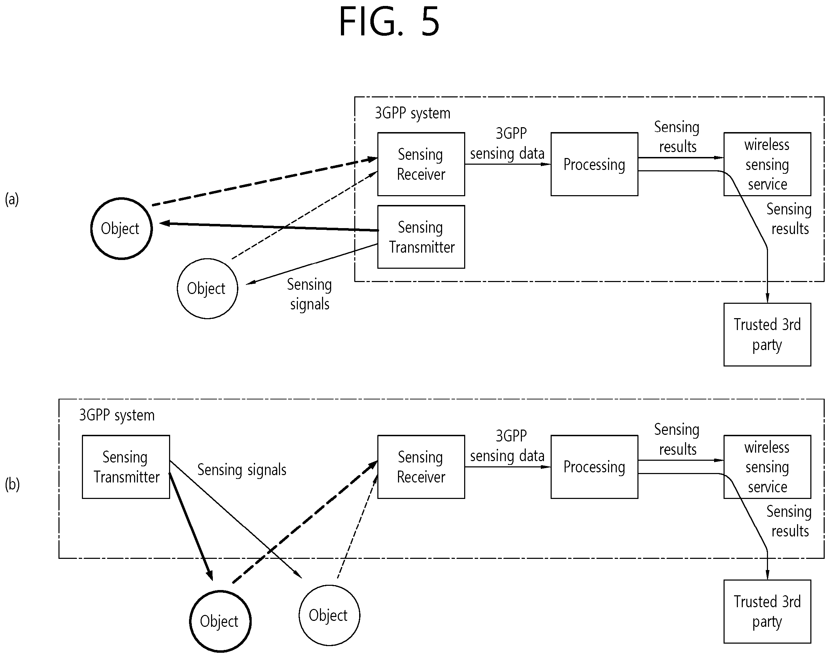

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, e.g., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, e.g., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (e.g., the physical layer or the PHY layer) and the second layer (e.g., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, e.g., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

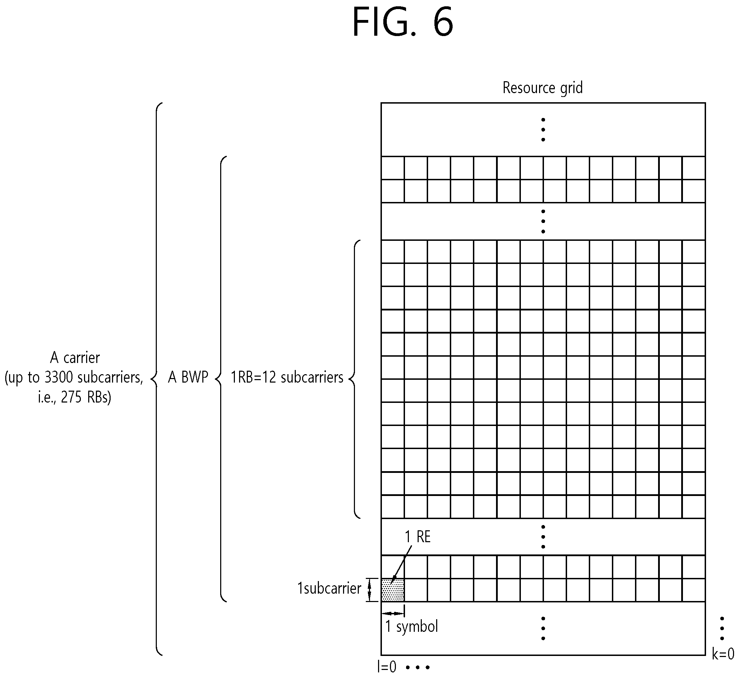

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

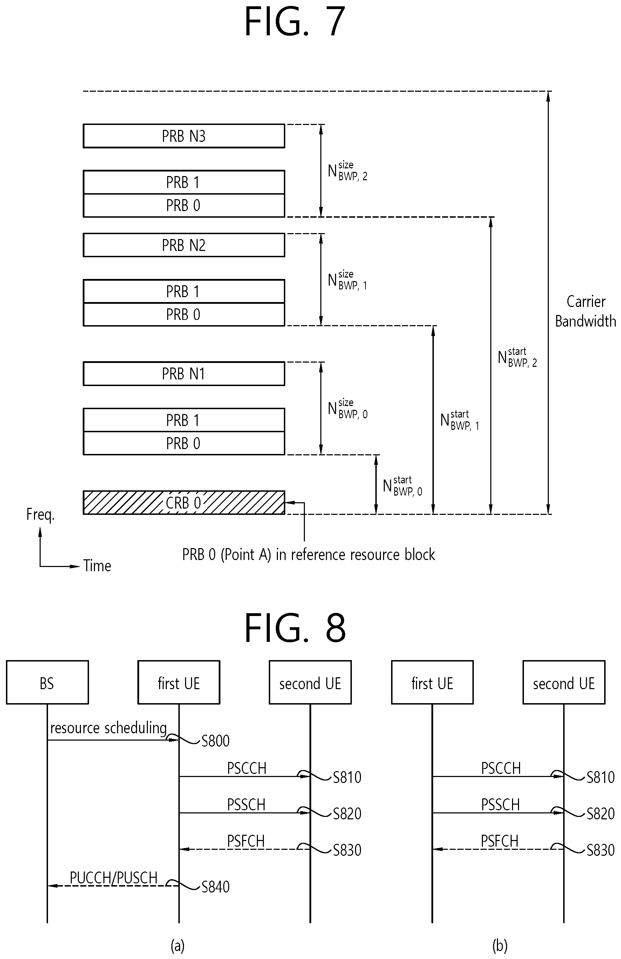

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in a step S830, a first UE may receive a PSFCH. For example, a first UE and a second UE may determine a PSFCH resource, and a second UE may transmit HARQ feedback to a first UE using a PSFCH resource.

Referring to (a) of FIG. 8, in a step S840, a first UE may transmit SL HARQ feedback to a base station through a PUCCH and/or a PUSCH.

Recently, introduction of an (future) air mobility (e.g., advanced air mobility (AAM)) system encompassing urban air mobility (UAM), regional air mobility (RAM), unmanned aircraft systems (UAS), and the like has been actively discussed.

For example, air mobility (e.g., AAM) may refer to urban air transportation based on a transportation means such as an air taxi supporting vertical takeoff and landing. For example, air mobility (e.g., AAM) may refer to a transportation means capable of moving in a vertical direction and capable of performing communication (or equipped with a device capable of performing communication), or a UE mounted thereon.

Here, methods for supporting a new mobile communication scenario according to support of the air mobility (e.g., AAM) have also been actively discussed. For example, scenarios such as air-to-ground communication in which an aerial UE communicates with a terrestrial base station, and air-to-air communication in which an aerial UE communicates with another aerial UE, etc. may be newly introduced.

Here, a new type of interference environment may occur according to scenarios such as air-to-ground communication and/or air-to-air communication. For example, a UE-to-base station communication signal (e.g., an uplink (UL) communication signal) transmitted by an aerial UE to a (terrestrial) base station (or cell), etc. may act as UE-to-base station communication (e.g., UL communication) interference to one or more other (terrestrial) base station(s) (or cell(s)) other than the (terrestrial) base station (or cell) serving the aerial UE (e.g., air-to-ground interference). For example, a UE-to-base station communication signal (e.g., a UL communication signal) transmitted by an aerial UE to a (terrestrial) base station (or cell) may cause UE-to-base station communication (e.g., UL communication) interference to one or more other (terrestrial) base station(s) (or cell(s)) other than the (terrestrial) base station (or cell) serving the aerial UE (e.g., air-to-ground interference). For example, a UE-to-base station communication signal (e.g., a UL communication signal) transmitted by an aerial UE to a (terrestrial) base station (or cell) may be UE-to-base station communication (e.g., UL communication) interference to one or more other (terrestrial) base station(s) (or cell(s)) other than the (terrestrial) base station (or cell) serving the aerial UE (e.g., air-to-ground interference).

Alternatively, for example, a base station-to-UE communication signal (e.g., a downlink (DL) communication signal) transmitted by a (terrestrial) base station (or cell) to an aerial UE and/or a terrestrial UE may act as base station-to-UE communication (e.g., DL communication) interference to another aerial UE other than a UE served by the (terrestrial) base station (or cell) (e.g., ground-to-air interference). For example, a base station-to-UE communication signal (e.g., a DL communication signal) transmitted by a (terrestrial) base station (or cell) to an aerial UE and/or a terrestrial UE may cause base station-to-UE communication (e.g., DL communication) interference to another aerial UE other than a UE served by the (terrestrial) base station (or cell) (e.g., ground-to-air interference). For example, a base station-to-UE communication signal (e.g., a DL communication signal) transmitted by a (terrestrial) base station (or cell) to an aerial UE and/or a terrestrial UE may be base station-to-UE communication (e.g., DL communication) interference to another aerial UE other than a UE served by the (terrestrial) base station (or cell) (e.g., ground-to-air interference).

Here, in order to mitigate the interference impact, transmit power control of a UE in a three-dimensional space including the air (or a vertical direction) may be required. Accordingly, the present disclosure proposes a method and device for controlling transmit power of an aerial UE in consideration of interference impact on the air and/or the ground.

Hereinafter, "transmitting a resource" may mean performing transmission through (or by using) a related resource. And/or, hereinafter, "transmitting a resource" may mean transmitting information for a related resource.

### [Proposal #01]

According to an embodiment of the present disclosure, a base station (or network) may configure, for a UE, (independent) (maximum) transmit power per altitude, per route, per movement (acceleration) speed/direction, and/or per beam direction of the UE, and the UE may perform a power control procedure based on the (independent) (maximum) transmit power per altitude, per route, per movement (acceleration) speed/direction, and/or per beam direction of the UE according to the configuration and/or indication of the base station (or network).

Here, the UE may be a UE for a specific service and/or a specific type of UE. For example, the UE may refer to a UE, such as a UAV, etc., capable of flying in the air (or capable of movement in a vertical direction).

For example, assuming that a (terrestrial) base station (or network) provides a service for an aerial UE (e.g., a UAV) and/or a terrestrial UE (e.g., a handheld device) in a next-generation mobile communication system according to an embodiment of the present disclosure, the aerial UE may take off from the ground and move through the air. Alternatively, the aerial UE may be mounted on an entity that takes off from the ground and moves through the air. For example, the aerial UE may include a UAV UE and the like, and may fly (or move) along a route including the ground and/or the air. Here, a scheme may be considered in which a transmit power control procedure for the aerial UE (or to be performed by the aerial UE) is operated separately according to altitude, route, movement (acceleration) speed/direction, and/or beam direction of the UE, which are characteristics of the aerial UE.

For example, a transmit power control procedure may be operated (or performed) differently according to altitude of an aerial UE. For example, when the altitude of the aerial UE is low (e.g., lower than a threshold value), the corresponding environment may correspond to a ground-to-ground communication environment, and the same transmit power control procedure as that of a terrestrial UE may be applied to the aerial UE. For example, when the altitude of the aerial UE is high (e.g., higher than a threshold value), the corresponding environment may correspond to an air-to-ground communication environment, and a transmit power control procedure different from that of a terrestrial UE may be applied to the aerial UE.

For example, maximum transmit power (e.g., PCMAX and/or configured maximum output power) per altitude of an aerial UE may be configured. For example, when the altitude of the aerial UE is low (e.g., lower than a threshold value), the maximum transmit power may be configured to be relatively high (e.g., higher than a reference value, or higher than that when the altitude is high (e.g., higher than a threshold value)), and when the altitude of the aerial UE is high (e.g., higher than a threshold value), the maximum transmit power may be configured to be relatively low (e.g., lower than a reference value, or lower than that when the altitude is low (e.g., lower than a threshold value)). Here, an air-to-ground interference impact may be mitigated through the maximum transmit power constraint at the high altitude.

Accordingly, the present disclosure proposes a scheme in which a base station (or network) configures, for a UE, (independent) maximum transmit power per altitude, per route, per movement (acceleration) speed/direction, and/or per beam direction of the UE, and the UE performs a power control procedure based on the (independent) maximum transmit power per altitude, per route, per movement (acceleration) speed/direction, and/or per beam direction of the UE according to the configuration/indication of the base station (or network).

For example, according to the proposed scheme of the present disclosure, there may be an advantage in that interference impact on the ground and/or the air can be controlled by configuring maximum transmit power per altitude, per route, per movement (acceleration) speed/direction, and/or per beam direction of the UE.

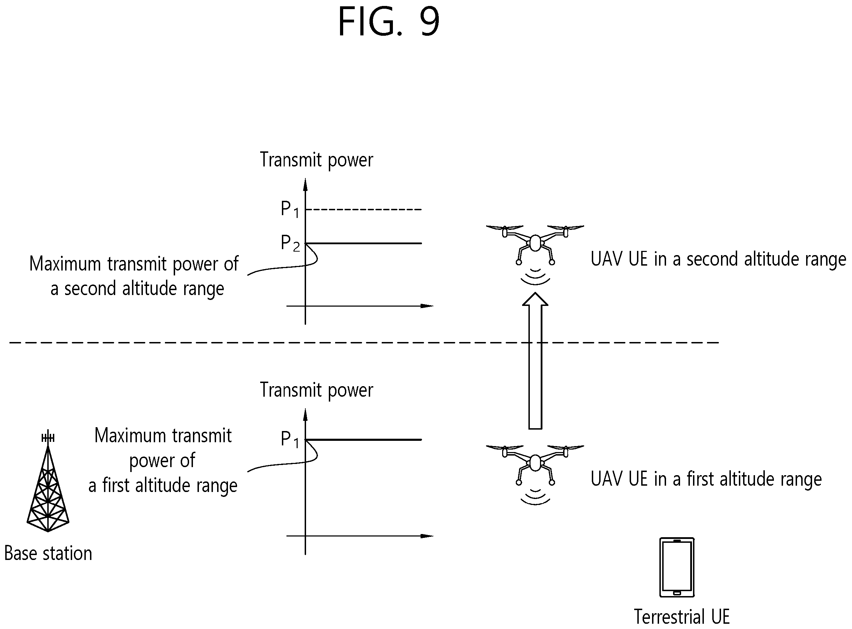

FIG. 9 shows maximum transmit power configured differently according to an altitude range of a UE according to an embodiment of the present disclosure. The embodiment of FIG. 9 may be combined with various embodiments of the present disclosure.

Referring to FIG. 9, a UAV UE described as an aerial UE in the present disclosure is shown. Since the UAV UE may move in a vertical direction, an altitude of the UAV UE may be included in a first altitude range or a second altitude range distinguished by a threshold altitude.

For example, when an altitude of the UAV UE is included in the first altitude range, maximum transmit power of the UAV UE may be configured as P₁. For example, when the altitude of the UAV UE is included in the second altitude range, the maximum transmit power of the UAV UE may be configured as P₂. For example, P₂ may be lower than P₁.

For example, maximum transmit power according to an altitude of a UAV UE may be configured by a base station.

In the present embodiment, maximum transmit power is distinguished only according to an altitude of a UE, but according to another embodiment, the altitude of the UE may be extended to a route, movement (acceleration) speed/direction, and/or beam direction of the UE. For example, in the present embodiment, only two altitude ranges are defined, but the number of altitude ranges may be extended to three or more.

The above [Proposal #01] may be applied in combination with other proposed scheme(s), as long as operations disclosed therein do not conflict with each other.

### [Proposal #02]

According to an embodiment of the present disclosure, a base station (or network) may configure, for a UE, (independent) pathloss measurement and/or a reference signal for pathloss measurement per altitude, per route, per movement (acceleration) speed/direction, and/or per beam direction of the UE, and the UE may perform a (transmit) power control procedure based on the (independent) pathloss measurement and/or the reference signal for pathloss measurement per altitude, per route, per movement (acceleration) speed/direction, and/or per beam direction of the UE according to the configuration and/or indication of the base station (or network).

Here, the base station may transmit, to the UE, range information for (the UE's) altitude, route, movement (acceleration) speed/direction, and/or beam direction for distinguishing pathloss measurements. For example, the base station may transmit, to the UE, information related to ranges of (the UE's) altitude, route, movement (acceleration) speed/direction, and/or beam direction for distinguishing pathloss measurements (e.g., a boundary value of each range, an index related to each range, etc.).

Here, the UE may be a UE for a specific service and/or a specific type of UE. For example, the UE may refer to a UE, such as a UAV, capable of flying in the air (or capable of movement in a vertical direction).

For example, according to an embodiment of the present disclosure, assuming that a (terrestrial) base station (or network) provides a service for an aerial UE (e.g., a UAV) and/or a terrestrial UE (e.g., a handheld device) in a next-generation mobile communication system, the aerial UE may take off from the ground and move through the air. For example, the aerial UE may include a UAV UE and the like, and may fly (or move) along a route including the ground and/or the air. Here, a scheme may be considered in which a transmit power control procedure for the aerial UE is operated separately according to (the UE's) altitude, route, movement (acceleration) speed/direction, and/or beam direction, which are characteristics of the aerial UE.

For example, a transmit power control procedure may be operated (or performed) differently according to altitude. For example, when the altitude of the aerial UE is low (e.g., lower than a threshold value), the corresponding environment may correspond to a ground-to-ground communication environment, and the same transmit power control procedure as that of a terrestrial UE may be applied (or performed) in the aerial UE. For example, when the altitude of the aerial UE is high (e.g., higher than a threshold value), the corresponding environment may correspond to an air-to-ground communication environment, and a transmit power control procedure different from that of a terrestrial UE may be applied (or performed) in the aerial UE.

Here, in order to operate a transmit power control procedure, a corresponding pathloss measurement may need to be premised. Accordingly, in order to support a transmit power control procedure per (the UE's) altitude, route, movement (acceleration) speed/direction, and/or beam direction, pathloss measurement per (the UE's) altitude, route, movement (acceleration) speed/direction, and/or beam direction may need to be supported.

For example, when a transmit power control procedure per altitude is operated (or performed) independently, pathloss per altitude between a base station (or network) and a UE may need to be measured. Here, pathloss measurement per (the UE's) altitude, route, movement (acceleration) speed/direction, and/or beam direction may be performed using the same reference signal resource for pathloss measurement, or may be performed using reference signals for pathloss measurement (different) per (the UE's) altitude, route, movement (acceleration) speed/direction, and/or beam direction.

For example, in the former case, the UE may use the same reference signal for pathloss measurement, while performing pathloss measurement separately per (the UE's) altitude, route, movement (acceleration) speed/direction, and/or beam direction.

Accordingly, the present disclosure proposes a scheme in which a base station (or network) configures, for a UE, (independent) pathloss measurement and/or a reference signal for pathloss measurement per (the UE's) altitude, route, movement (acceleration) speed/direction, and/or beam direction, and the UE performs a power control procedure based on the (independent) reference signal for pathloss measurement per (the UE's) altitude, route, movement (acceleration) speed/direction, and/or beam direction according to the configuration and/or indication of the base station (or network).

According to the proposed scheme of the present disclosure, by configuring pathloss measurement and/or a reference signal for pathloss measurement per (the UE's) altitude, route, movement (acceleration) speed/direction, and/or beam direction, a transmit power control procedure per (the UE's) altitude, route, movement (acceleration) speed/direction, and/or beam direction is supported, and thus there is an advantage in that interference impact on the ground and/or the air can be controlled.

The above [Proposal #02] may be applied in combination with other proposed scheme(s), as long as operations disclosed therein do not conflict with each other.

### [Proposal #03]

According to an embodiment of the present disclosure, a base station (or network) may configure, for a UE, (independent) sounding reference signal resources per (the UE's) altitude, route, movement (acceleration) speed/direction, and/or beam direction, and the UE may perform (independent) sounding reference signal resource transmission per (the UE's) altitude, route, movement (acceleration) speed/direction, and/or beam direction according to the configuration and/or indication of the base station (or network).

Here, the UE may be a UE for a specific service and/or a specific type of UE. For example, the UE may refer to a UE, such as a UAV, capable of flying in the air (or capable of movement in a vertical direction).

Here, the sounding reference signal resources (independent) per (the UE's) altitude, route, movement (acceleration) speed/direction, and/or beam direction may be resources distinguished from each other in a time domain, a frequency domain, a code domain, and/or a sequence domain.

For example, in a next-generation mobile communication system according to an embodiment of the present disclosure, assuming that a (terrestrial) base station (or network) provides a service for an aerial UE (e.g., a UAV) and/or a terrestrial UE (e.g., a handheld device) the aerial UE may take off from the ground and move through the air. For example, the aerial UE may be a UAV UE and the like, and may fly (or move) along a route including the ground and/or the air. Here, a scheme may be considered in which a UE-to-base station communication (e.g., uplink (UL) communication) channel measurement procedure for the aerial UE is operated separately according to (the UE's) altitude, route, movement (acceleration) speed/direction, and/or beam direction, which are characteristics of the aerial UE.

Here, in order to perform a UE-to-base station communication (e.g., uplink (UL) communication) channel measurement procedure, transmission of a sounding reference signal (SRS) may be required. Accordingly, in order to support a UE-to-base station communication (e.g., UL communication) channel measurement procedure per (the UE's) altitude, route, movement (acceleration) speed/direction, and/or beam direction, sounding reference signal transmission per (the UE's) altitude, route, movement (acceleration) speed/direction, and/or beam direction may need to be supported. For example, when a UE-to-base station communication (e.g., UL communication) channel measurement procedure per altitude is operated (or performed) independently, the UE may need to be capable of performing sounding reference signal resource transmission per altitude.

Accordingly, the present disclosure proposes a scheme in which a base station (or network) configures, for a UE, sounding reference signals (independent) per (the UE's) altitude, route, movement (acceleration) speed/direction, and/or beam direction, and the UE performs sounding reference signal transmission (independent) per (the UE's) altitude, route, movement (acceleration) speed/direction, and/or beam direction according to the configuration/indication of the base station (or network). According to the proposed scheme of the present disclosure, optimal UE-to-base station communication (e.g., UL communication) discovery per (the UE's) altitude, route, movement (acceleration) speed/direction, and/or beam direction may be supported during air-to-ground communication.

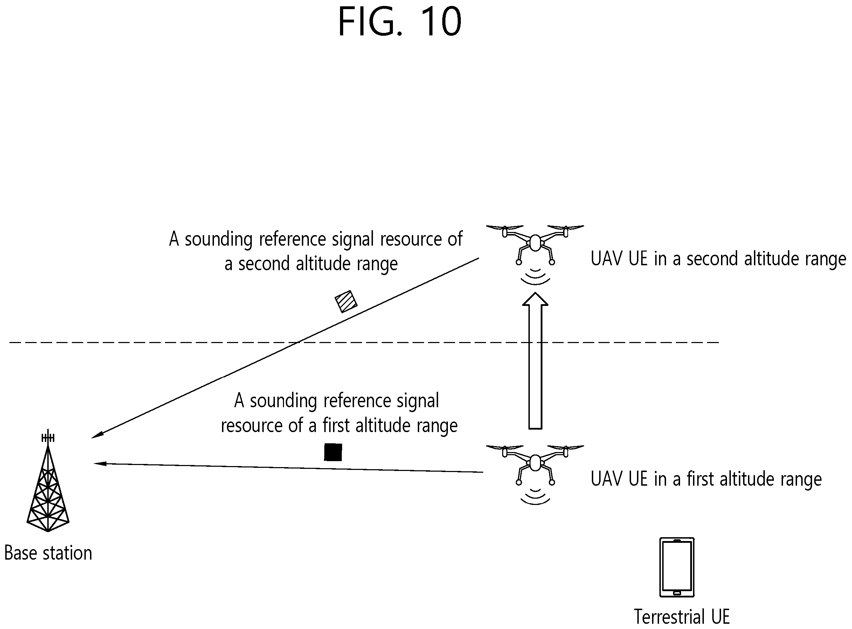

FIG. 10 shows sounding reference signal resources configured per altitude of a UE according to an embodiment of the present disclosure. The embodiment of FIG. 10 may be combined with various embodiments of the present disclosure.

Referring to FIG. 10, a UAV UE described as an aerial UE in the present disclosure is shown. Since the UAV UE is capable of moving in a vertical direction, an altitude of the UAV UE may be included in a first altitude range or a second altitude range distinguished by a threshold altitude.

For example, when an altitude of the UAV UE is included in the first altitude range, a resource to be used by the UAV UE for transmitting a sounding reference signal (e.g., SRS) may be a first reference signal resource. For example, when the altitude of the UAV UE is included in the second altitude range, a resource to be used by the UAV UE for transmitting a sounding reference signal (e.g., SRS) may be a second reference signal resource. For example, the first reference signal resource and the second reference signal resource may be different.

For example, sounding reference signal (e.g., SRS) resources configured differently according to an altitude of a UAV UE may be configured by a base station.

In the present embodiment, reference signal resources for transmitting a sounding reference signal (e.g., SRS) are distinguished only according to an altitude of a UE, but according to another embodiment, the altitude of the UE may be extended to a route, movement (acceleration) speed/direction, and/or beam direction of the UE. For example, in the present embodiment, only two altitude ranges are defined, but the number of altitude ranges may be extended to three or more.

The above [Proposal #03] may be applied in combination with other proposed scheme(s), as long as operations disclosed therein do not conflict with each other.

### [Proposal #04]

According to an embodiment of the present disclosure, a method may be provided in which a base station (or network) configures, for a UE, open-loop power control (e.g., OLPC) formulas and/or parameters (independent) per (the UE's) altitude, route, movement (acceleration) speed/direction, and/or beam direction, and the UE performs a (transmit) power control procedure based on the open-loop power control (e.g., OLPC) formulas and/or parameters (independent) per (the UE's) altitude, route, movement (acceleration) speed/direction, and/or beam direction according to the configuration and/or indication of the base station (or network).

Here, the UE may be a UE for a specific service and/or a specific type of UE. For example, the UE may refer to a UE, such as a UAV, etc., capable of flying in the air (or capable of movement in a vertical direction).

Here, the open-loop power control (e.g., OLPC) parameters may include a reference signal transmit power, a target received power, and/or a pathloss compensation factor.

For example, in a next-generation mobile communication system according to an embodiment of the present disclosure, assuming that a (terrestrial) base station (or network) provides a service for an aerial UE (e.g., a UAV) and/or a terrestrial UE (e.g., a handheld device) the aerial UE may take off from the ground and move through the air. For example, the aerial UE may be a UAV UE and the like, and may fly (or move) along a route including the ground and/or the air. Here, a scheme may be considered in which a transmit power control procedure for the aerial UE is operated separately according to (the UE's) altitude, route, movement (acceleration) speed/direction, and/or beam direction, which are characteristics of the aerial UE.

For example, a transmit power control procedure may be operated (or performed) differently according to altitude. For example, when the altitude of the aerial UE is low (e.g., lower than a threshold value), the corresponding environment may correspond to a ground-to-ground communication environment, and the same transmit power control procedure as that of a terrestrial UE may be applied (or performed). For example, when the altitude of the aerial UE is high (e.g., higher than a threshold value), the corresponding environment may correspond to an air-to-ground communication environment, and a transmit power control procedure different from that of a terrestrial UE may be applied (or performed).

According to an embodiment of the present disclosure, open-loop power control (e.g., OLPC) formulas and/or parameters may be configured per altitude. For example, when the altitude of the aerial UE is low (e.g., lower than a threshold value), the same open-loop power control (e.g., OLPC) formulas and/or parameters as those applied to a terrestrial UE may be applied (in the aerial UE). For example, when the altitude of the aerial UE is high (e.g., higher than a threshold value), formulas and/or parameters different from the open-loop power control (e.g., OLPC) formulas and/or parameters applied to a terrestrial UE may be applied (in the aerial UE).

According to an embodiment of the present disclosure, when the altitude of the aerial UE is high (e.g., higher than a threshold value), an open-loop power control (e.g., OLPC) formula may be provided (or applied) such that, after a specific pathloss value (e.g., PLTH) corresponding to a specific distance and/or radius (e.g., when the pathloss value is equal to or higher than PLTH), a reduction rate of transmit power increases, for the purpose of limiting interference impact according to a line-of-sight (LOS) channel environment (having a characteristic that the number of cells for which LOS is secured increases as the altitude of the aerial UE increases).

Alternatively, for example, in the above case, transmit power may be constrained to decrease at a high altitude by changing a reference signal transmit power, a target received power, and/or a pathloss compensation factor among open-loop power control (e.g., OLPC) parameters. For example, when a pathloss measured by the UE is equal to or greater than a pathloss threshold value corresponding to a specific radius (or configured for the specific radius), a transmit power control procedure may be operated (or configured) such that transmit power is configured as 0 or a (pre-)configured and/or (pre-)agreed minimum transmit power value. Here, the pathloss threshold value may be pre-agreed or may be (pre-)configured by a base station (or network).

Accordingly, the present disclosure proposes a scheme in which a base station (or network) configures, for a UE, open-loop power control (e.g., OLPC) formulas and/or parameters (independent) per (the UE's) altitude, route, movement (acceleration) speed/direction, and/or beam direction, and the UE performs a power control procedure based on the open-loop power control (e.g., OLPC) formulas and/or parameters (independent) per (the UE's) altitude, route, movement (acceleration) speed/direction, and/or beam direction according to the configuration/indication of the base station (or network).

For example, according to the proposed scheme of the present disclosure, there may be an advantageous effect that interference impact on the air and/or the ground is mitigated by adjusting open-loop power control (e.g., OLPC) formulas and/or parameters per (the UE's) altitude, route, movement (acceleration) speed/direction, and/or beam direction.

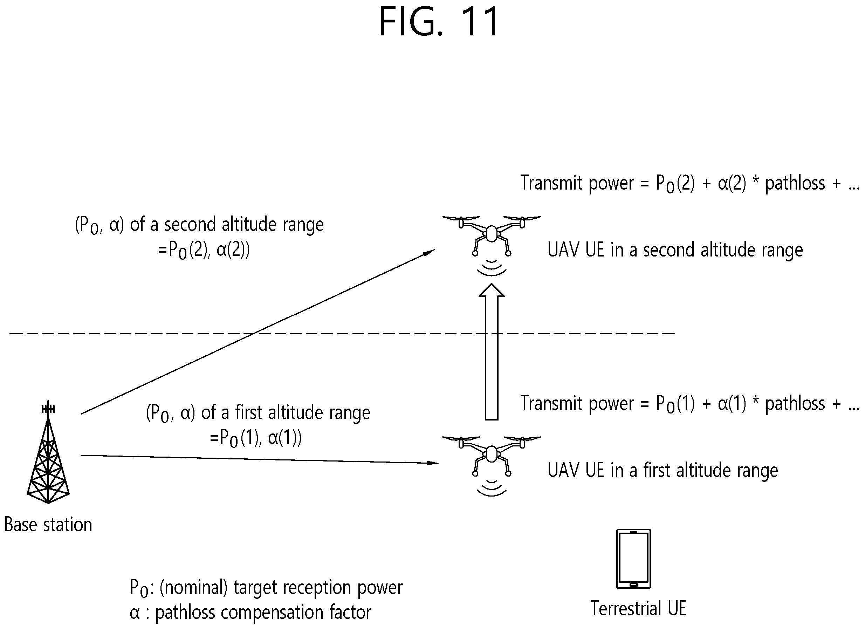

FIG. 11 shows open-loop power control (e.g., OLPC) formulas and parameters configured differently according to an altitude range of a UE according to an embodiment of the present disclosure. The embodiment of FIG. 11 may be combined with various embodiments of the present disclosure.

Referring to FIG. 11, a UAV UE described as an aerial UE in the present disclosure is shown. Since the UAV UE may move in a vertical direction, an altitude of the UAV UE may be included in a first altitude range or a second altitude range distinguished by a threshold altitude.

For example, when an altitude of the UAV UE is included in the first altitude range, the UAV UE may determine transmit power based on a first open-loop power control formula using P₀(1) and α(1). For example, according to the first open-loop power control formula, the transmit power may include "P₀(1) + α(1) * pathloss".

For example, when an altitude of the UAV UE is included in the second altitude range, the UAV UE may determine transmit power based on a second open-loop power control formula using P₀(2) and α(2). For example, according to the second open-loop power control formula, the transmit power may include "P₀(2) + α(2) * pathloss".

For example, an open-loop power control formula applied according to an altitude of a UAV UE and a coefficient applicable thereto may be configured by a base station.

In the present embodiment, open-loop power control formulas and parameters related thereto are distinguished only according to an altitude of a UE, but according to another embodiment, the altitude of the UE may be extended to a route, movement (acceleration) speed/direction, and/or beam direction of the UE. For example, in the present embodiment, only two altitude ranges are defined, but the number of altitude ranges may be extended to three or more.

The above [Proposal #04] may be applied in combination with other proposed scheme(s), as long as operations disclosed therein do not conflict with each other.

### [Proposal #05]

According to an embodiment of the present disclosure, a scheme is provided in which a base station (or network) configures, for a UE, a (transmit) power control procedure (independent) per (the UE's) altitude, route, movement (acceleration) speed/direction, and/or beam direction, and delivers one or more of the following pieces of information as related configuration information.
(1) Information for whether a (specific) (transmit) power control procedure is applied per (the UE's) altitude, route, movement (acceleration) speed/direction, and/or beam direction. For example, information for whether a (specific) (transmit) power control procedure is applied per (the UE's) altitude, route, movement (acceleration) speed/direction, and/or beam direction.
(2) Identification information for a (transmit) power control procedure per (the UE's) altitude, route, movement (acceleration) speed/direction, and/or beam direction. For example, information related to identification information for a (specific) (transmit) power control procedure to be applied per (the UE's) altitude, route, movement (acceleration) speed/direction, and/or beam direction. For example, a (transmit) power control procedure may be related to specific identification information according to the procedure.

Here, the UE may perform an (independent) power control procedure per altitude and/or route according to a configuration of a base station (or network).

Here, the UE may be a UE for a specific service and/or a specific type of UE. For example, the UE may refer to a UE, such as a UAV, etc., capable of flying in the air (or capable of movement in a vertical direction).

Here, when a (transmit) power control procedure for a specific (the UE's) altitude, route, movement (acceleration) speed/direction, and/or beam direction is not designated for the UE, the UE may apply (or perform) a (transmit) power control procedure designated as a pre-agreed and/or default option.

For example, according to an embodiment of the present disclosure, assuming that a (terrestrial) base station (or network) provides a service for an aerial UE (e.g., a UAV) and/or a terrestrial UE (e.g., a handheld device) in a next-generation mobile communication system the aerial UE may take off from the ground and move through the air. For example, the aerial UE may be a UAV UE and the like, and may fly (or move) along a route including the ground and/or the air. Here, a scheme may be considered in which a transmit power control procedure for the aerial UE (or to be used for a transmission operation of the aerial UE) is operated separately according to (the UE's) altitude, route, movement (acceleration) speed/direction, and/or beam direction, which are characteristics of the aerial UE.

Here, a base station (or network) may inform a UE of whether a transmit power control procedure (independent) per (the UE's) altitude, route, movement (acceleration) speed/direction, and/or beam direction is applied. For example, the base station (or network) may configure a single transmit power control procedure without distinguishing altitude for the UE, or may configure (independent) transmit power control procedures per altitude.

Here, for example, a base station (or network) may transmit, to a UE, identification information for identifying a transmit power control procedure per (the UE's) altitude, route, movement (acceleration) speed/direction, and/or beam direction (together). For example, the base station (or network) may transmit, to the UE, a transmit power control identifier per altitude, and the UE may apply (or perform) a transmit power control procedure corresponding to a transmit power control identifier specified by (or related to) a corresponding altitude according to altitude information measured and/or reported by the UE.

Here, for example, when the UE is not designated with a (transmit) power control procedure for a specific altitude, the UE may apply (or perform) a (transmit) power control procedure designated as a pre-agreed with a base station (or network) and/or default option.

For example, according to the proposed scheme of the present disclosure, (independent) (transmit) power control procedures per (the UE's) altitude, route, movement (acceleration) speed/direction, and/or beam direction between a base station (or network) and the UE may be clearly identified and operated (or performed).

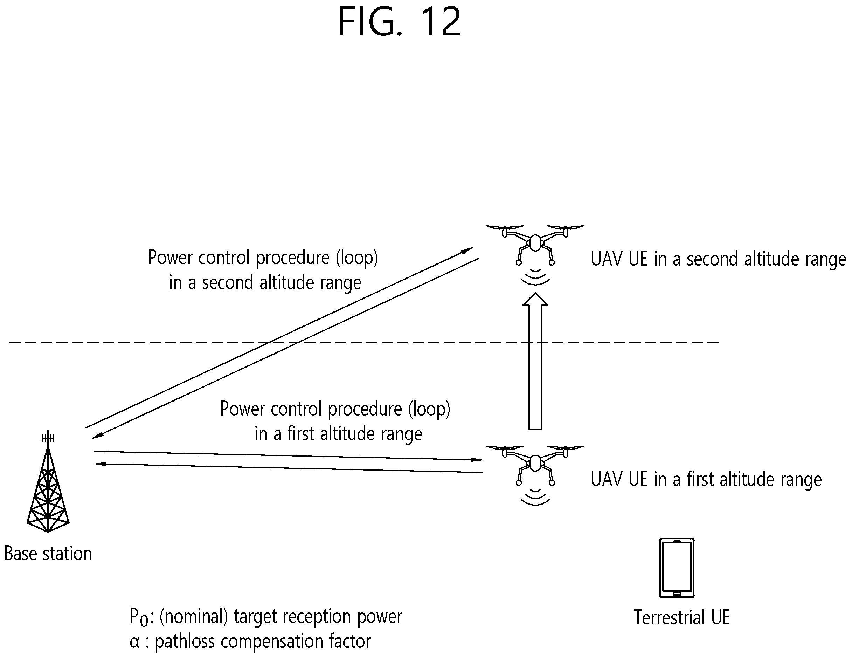

FIG. 12 shows transmit power control procedures configured differently according to an altitude range of a UE according to an embodiment of the present disclosure. The embodiment of FIG. 12 may be combined with various embodiments of the present disclosure.

Referring to FIG. 12, a UAV UE described as an aerial UE in the present disclosure is shown. Since the UAV UE may move in a vertical direction, an altitude of the UAV UE may be included in a first altitude range or a second altitude range distinguished by a threshold altitude.

For example, when an altitude of the UAV UE is included in the first altitude range, the UAV UE may perform a power control operation based on a power control procedure specifically configured for the first altitude range. For example, when the altitude of the UAV UE is included in the second altitude range, the UAV UE may perform a power control operation based on a power control procedure specifically configured for the second altitude range. For example, the power control procedure specifically configured for the first altitude range and the power control procedure specifically configured for the second altitude range may be different.

For example, a power control procedure specifically configured for each altitude range in which an altitude of a UAV UE may be included may be configured by a base station.

In the present embodiment, power control procedures are distinguished only according to an altitude of a UE, but according to another embodiment, the altitude of the UE may be extended to a route, movement (acceleration) speed/direction, and/or beam direction of the UE. For example, in the present embodiment, the altitude range is divided into two ranges, but the number of altitude ranges may be extended to three or more.

The above [Proposal #05] may be applied in combination with other proposed scheme(s), as long as operations disclosed herein do not conflict with each other.

### [Proposal #06]

According to an embodiment of the present disclosure, a multi-pathloss-measurement-based (transmit) power control method may be provided, in which a base station (or network) configures, for a UE, a plurality of pathloss measurement reference signal resource(s) for a (single) (transmit) power control procedure, the UE derives a target (transmit) power and/or a maximum (transmit) power corresponding to each pathloss, and the UE determines a final transmit power based on the plurality of target (transmit) powers and/or maximum (transmit) powers according to the configuration and/or indication of the base station (or network).

Here, the UE may determine a final (transmit) power based on the target (transmit) power(s) and/or maximum (transmit) power(s) by one or more of the following (or through one or more of the following, or using one or more of the following).
(1) a minimum value among the target (transmit) power(s) and/or maximum (transmit) power(s)
(2) a maximum value among the target (transmit) power(s) and/or maximum (transmit) power(s)
(3) an average value among the target (transmit) power(s) and/or maximum (transmit) power(s)

Here, a base station (or network) may configure, for a UE, whether a multi-pathloss-measurement-based power control scheme is applied. For example, the multi-pathloss-measurement-based power control scheme may be configured independently per (the UE's) altitude, route, movement (acceleration) speed/direction, and/or beam direction.

Here, the base station (or network) may configure, for each pathloss, (independent) open-loop power control (e.g., OLPC) formulas and/or parameters for allowing the UE to derive a target (transmit) power and/or a maximum (transmit) power corresponding to each pathloss. For example, an open-loop power control (e.g., OLPC) formula and/or parameter considering reception performance may be configured for a pathloss with a serving cell, and an open-loop power control (e.g., OLPC) formula and/or parameter considering interference impact may be configured for a pathloss with a neighboring cell. Here, the open-loop power control (e.g., OLPC) parameters may include a reference signal transmit power, a target received power, and/or a pathloss compensation factor, etc.

For example, in a next-generation mobile communication system according to an embodiment of the present disclosure, assuming that a (terrestrial) base station (or network) provides a service for an aerial UE (e.g., a UAV) and/or a terrestrial UE (e.g., a handheld device) the aerial UE may take off from the ground and move through the air. For example, the aerial UE may be a UAV UE and the like, and may fly (or move) along a route including the ground and/or the air.

Here, for example, when the aerial UE flies at or above a certain altitude, according to characteristics of a LOS channel environment (having a characteristic that the number of cells for which LOS is secured increases as the altitude of the aerial UE increases), a signal transmitted by the aerial UE may act as interference to, cause interference to, or be interference to multiple neighboring cell(s) other than a serving cell.

Here, a base station (or network) may configure the aerial UE to apply (or perform) a (transmit) power control procedure based on multiple pathloss measurements for (potential) multiple links that may be affected by the UE. For example, the base station (or network) may configure the aerial UE to measure a pathloss with a serving cell (hereinafter, a first pathloss) and/or a pathloss with neighboring cell(s) (hereinafter, a second pathloss).

Here, the UE may derive a transmit power target value (from a reception performance perspective) based on the first pathloss, and may derive a transmit power constraint (e.g., a transmit power upper limit value) based on the second pathloss. Here, the UE may determine a final transmit power in consideration of both the transmit power target value and the transmit power constraint (e.g., the transmit power upper limit value). For example, the UE may select a transmit power corresponding to the minimum value among the transmit power target value and the transmit power constraint (e.g., the transmit power upper limit value).

For example, according to the proposed scheme of the present disclosure, transmit power configuration considering both transmission performance to a serving cell and interference impact on neighboring cell(s) may be supported.

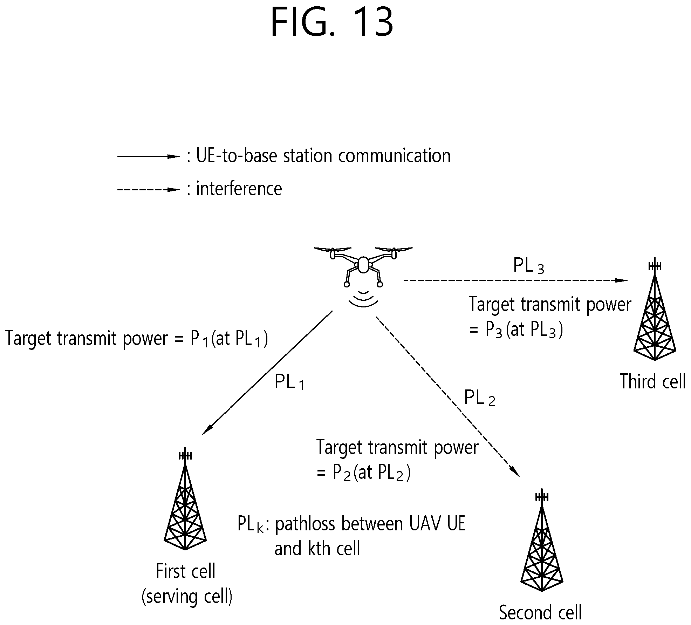

FIG. 13 shows a multi-pathloss-measurement-based power control procedure according to an embodiment of the present disclosure. The embodiment of FIG. 13 may be combined with various embodiments of the present disclosure.

Referring to FIG. 13, a UAV UE described as an aerial UE in the present disclosure is shown. The UAV UE may be a UE served by a first cell.

For example, in order to perform a multi-pathloss-measurement-based power control procedure, the UAV UE may transmit a reference signal for each cell for which pathloss is to be measured. For example, a pathloss between the UAV UE and the first cell may be PL₁. For example, a pathloss between the UAV UE and the second cell may be PL₂. For example, a pathloss between the UAV UE and the third cell may be PL₃.

For example, a target transmit power for PL₁ may be determined as P₁. For example, a target transmit power for PL₂ may be determined as P₂. For example, a target transmit power for PL₃ may be determined as P₃.

Here, the UAV UE may determine, as a final transmit power, the minimum value among the target transmit powers for PL₁ to PL₃, and may perform a transmission operation based thereon.

The above [Proposal #06] may be applied in combination with other proposed scheme(s), as long as operations of the disclosure do not conflict with each other.

### [Proposal #07]

According to an embodiment of the present disclosure, a method may be provided in which a base station (or network) configures, for a UE, a (maximum) transmit power per interference level, and the UE applies the (maximum) transmit power per interference level according to a configuration of the base station (or network).

Here, the UE may determine an (actual) transmit power according to a power control procedure (pre-)agreed with and/or configured by a base station (or network), within the finally determined (maximum) transmit power.

Here, for example, the interference level may be measured by a base station (or network) and then delivered to the UE, or the UE may directly measure the interference level through a sensing procedure. For example, the interference level may refer to a level of interference caused (or exerted) by an aerial UE to a terrestrial UE and/or a terrestrial base station.

For example, in a next-generation mobile communication system according to an embodiment of the present disclosure, assuming that a (terrestrial) base station (or network) provides a service for an aerial UE (e.g., a UAV) and/or a terrestrial UE (e.g., a handheld device) the aerial UE may take off from the ground and move through the air. For example, the aerial UE may be a UAV UE and the like, and may fly (or move) along a route including the ground and/or the air.

Here, the aerial UE may measure an interference level from a terrestrial UE and/or a terrestrial base station, and may control transmit power according to the interference level. For example, a base station (or network) may configure, for a UE, a (maximum) transmit power per interference level, and the UE may apply the (maximum) transmit power per interference level according to a configuration of the base station (or network).

Here, for example, the UE may transmit a signal with an (actual) transmit power according to a power control procedure within the (maximum) transmit power. Here, when the UE does not receive the (maximum) transmit power value per interference level through a configuration of a base station (or network), the UE may apply a pre-configured and/or pre-agreed value.

For example, according to the proposed scheme of the present disclosure, (maximum) transmit power control according to channel congestion and the like may be supported, through which interference impact on the air and/or the ground may be mitigated.

The above [Proposal #07] may be applied in combination with other proposed scheme(s), as long as operations of the disclosure do not conflict with each other.

### [Proposal #08]

According to an embodiment of the present disclosure, a method may be provided in which a base station (or network) allows distance-based pathloss measurement for a specific route to a UE, and the UE performs distance-based pathloss measurement and/or calculation according to the configuration and/or indication of the base station (or network).

Here, for example, the distance-based pathloss measurement and/or calculation may be a pathloss measurement and/or calculation method utilizing positions of nodes related to a corresponding route, a distance between nodes, and/or partial measurement results for the route, and the likes.

For example, in a next-generation mobile communication system according to an embodiment of the present disclosure, assuming that a (terrestrial) base station (or network) provides a service for an aerial UE (e.g., a UAV) and/or a terrestrial UE (e.g., a handheld device) the aerial UE may take off from the ground and move through the air. For example, the aerial UE may be a UAV UE and the like, and may fly (or move) along a route including the ground and/or the air.

Here, when the aerial UE performs pathloss measurement for a specific route for the purpose of a transmit power control procedure and the like, the aerial UE may generally measure pathloss using a pathloss measurement reference signal resource. Here, when the aerial UE flies at or above a certain altitude, due to a LOS channel environment (having a characteristic that the number of cells for which LOS is secured increases as the altitude of the aerial UE increases), there may be a very large number of cell(s) affected by interference impact due to signal transmission of the UE.

Accordingly, according to an embodiment of the present disclosure, the UE may perform (transmit) power control utilizing multi-pathloss information after measuring pathlosses for multiple paths with the corresponding cell(s). For example, the aerial UE may perform transmit power control in which both reception performance at a serving cell and interference impact at neighboring cell(s) are considered by utilizing the multi-pathloss information.

Here, for example, a process in which the UE measures each pathloss for multiple paths may be burdensome to the UE in terms of computation and complexity. Here, assuming a channel environment of the aerial UE is a LOS channel environment, a degree of pathloss may be predicted based on distance, and therefore, pathloss for some paths may be replaced with distance-based pathloss calculation and/or measurement.

According to the proposed scheme of the present disclosure, pathlosses between an aerial UE and cell(s) having a LOS channel environment may be predicted with low cost and/or low complexity, through which a transmit power control procedure considering both reception performance and/or interference impact may be supported.

The above [Proposal #08] may be applied in combination with other proposed scheme(s), as long as operations of the disclosure do not conflict with each other.

### [Proposal #09]

According to an embodiment of the present disclosure, a method may be provided in which interference information (independent) per (the UE's) altitude, route, movement (acceleration) speed/direction, and/or beam direction is exchanged between a base station (or network) and a UE and/or between UEs, wherein the interference information includes at least one or more of the following pieces of information.
(1) Relative Narrowband TX Power (RNTP)
(2) High-Interference Indicator (HII)
(3) Overload Indicator (OI)
(4) time and/or frequency resource information associated with use of a high transmit power
(5) time and/or frequency resource information on which high interference was received
(6) transmit power information per time and/or frequency resource
(7) (measured) interference magnitude information per time and/or frequency resource

Here, whether the transmit power and/or interference is high or low may be determined based on a (pre-)agreed and/or (pre-)configured threshold value. For example, when a specific threshold value is given, a case in which the transmit power and/or interference is higher than the corresponding threshold value may be defined as "high", and a case in which the transmit power and/or interference is lower than the corresponding threshold value may be defined as "low".

For example, a high transmit power and/or interference may refer to a case in which the transmit power and/or interference is higher than a (pre-)agreed and/or (pre-)configured threshold value, and a low transmit power and/or interference may refer to a case in which the transmit power and/or interference is lower than a (pre-)agreed and/or (pre-)configured threshold value.

For example, in a next-generation mobile communication system according to an embodiment of the present disclosure, assuming that a (terrestrial) base station (or network) provides a service for an aerial UE (e.g., a UAV) and/or a terrestrial UE (e.g., a handheld device) the aerial UE may take off from the ground and move through the air. For example, the aerial UE may be a UAV UE and the like, and may fly (or move) along a route including the ground and/or the air.

Here, in the aerial environment, an interference pattern/environment experienced by a UE may be different per (the UE's) altitude, route, movement (acceleration) speed/direction, and/or beam direction. For example, when the aerial UE is located at a low altitude, the aerial UE may receive a primary interference impact from terrestrial-service base station(s), and when the aerial UE is located at a high altitude, the aerial UE may receive a primary interference impact from aerial-service base station(s). Here, the base station (or network) and/or UE(s) may exchange interference information per altitude and/or information related to interference coordination.

From the above perspective, the present disclosure proposes a method in which interference information (independent) per (the UE's) altitude, route, movement (acceleration) speed/direction, and/or beam direction between a base station (or network) and a UE and/or between UEs is exchanged, wherein the interference information includes at least one of the following pieces of information.
(1) Relative Narrowband TX Power (RNTP)
(2) High-Interference Indicator (HII)
(3) Overload Indicator (OI)
(4) time and/or frequency resource information associated with use of a high transmit power
(5) time and/or frequency resource information on which high interference was received
(6) transmit power information per time and/or frequency resource
(7) (measured) interference magnitude information per time and/or frequency resource

For example, according to the proposed scheme of the present disclosure, exchange of interference information and/or interference coordination information optimized for an interference pattern/environment per (the UE's) altitude, route, movement (acceleration) speed/direction, and/or beam direction may be supported, through which an effect of interference coordination (IC) may be increased.

The above [Proposal #09] may be applied in combination with other proposed scheme(s), as long as operations of the disclosure do not conflict with each other.

The proposed method may be applied to a device described below. First, a processor 202 of a receiving UE 200 may configure at least one bandwidth part (e.g., BWP). In addition, the processor 202 of the receiving UE 200 may control a transceiver 206 of the receiving UE 200 to receive, from a transmitting UE 100, an inter-UE communication (e.g., SL communication; sidelink communication)-related physical channel and/or an inter-UE communication (e.g., SL communication)-related reference signal on the at least one bandwidth part (e.g., BWP).

Entities moving in the air, such as unmanned aerial mobility (UAM) and/or drones, may also perform communication, and since an entity moving in the air may secure a plurality of line of sights (LOSs) with other communication entities, LOSs may also be secured with a plurality of existing terrestrial base stations, which may mean that UE-to-base station communication (or base station-to-UE communication) performed in relation to communication associated with an individual cell may cause significant interference to other cells. For example, interference occurring in a communication operation may refer to a degree of disturbance that may be caused to a reception operation of a scheduled transmission when a performed transmission is received by an entity for which reception of the performed transmission is not intended while the entity performs a monitoring operation for receiving another scheduled transmission.

For example, an advanced air mobility (AAM) system encompassing UAM, regional air mobility (RAM), unmanned aircraft system (UAS), and the like may be provided, and AAM may refer to urban aviation based on transportation means such as an air taxi supporting vertical takeoff and landing. For example, a method and/or apparatus related to air-to-ground communication in which an aerial UE and a terrestrial base station communicate with each other, air-to-air communication in which an aerial UE and another aerial UE communicate with each other, and the like may be provided.

Here, a new type of interference environment may occur according to a scenario such as air-to-ground communication and/or air-to-air communication, etc. For example, a UE-to-base station (e.g., uplink) signal transmitted by an aerial UE to a (terrestrial) base station (or cell) may act as UE-to-base station (e.g., uplink) interference to other (terrestrial) base station(s) (or cell(s)) other than the (terrestrial) base station (or cell) serving the aerial UE (e.g., air-to-ground interference). Alternatively, for example, a base station-to-UE (e.g., downlink) signal transmitted by a (terrestrial) base station (or cell) to an aerial UE and/or a terrestrial UE may act as base station-to-UE (e.g., downlink) interference to another aerial UE other than a UE served by the (terrestrial) base station (or cell) (e.g., ground-to-air interference). Here, in order to mitigate the interference impact, UE transmit power control in a three-dimensional space in which the air (or altitude) is considered may be required.

According to an embodiment of the present disclosure, a parameter used for transmit power control may be determined according to an altitude of a UE (differently from a parameter used for power control of a terrestrial UE). According to an embodiment of the present disclosure, a transmit power control (support) method per altitude, route, and/or beam direction for air-to-ground interference coordination in a communication system may be provided. For example, the proposed method may include a method for configuring/defining a (maximum) transmit power per altitude, route, and/or beam direction and determining a transmit power within the (maximum) transmit power, a method for measuring a pathloss per altitude, route, and/or beam direction and configuring (independent) open-loop power control parameters/formulas per altitude, route, and/or beam direction, and/or a method for transmitting interference information per altitude, route, and/or beam direction, etc. In addition, the method may include a UE transmit power control method based on multi-pathloss measurement within one transmit power control procedure and a UE transmit power control method according to interference measurement and an interference magnitude.

According to various embodiments of the present disclosure, there may be an effect that overall communication can be efficiently performed by enabling interference that may be caused to other communications to be controlled according to an altitude of an aerial UE.

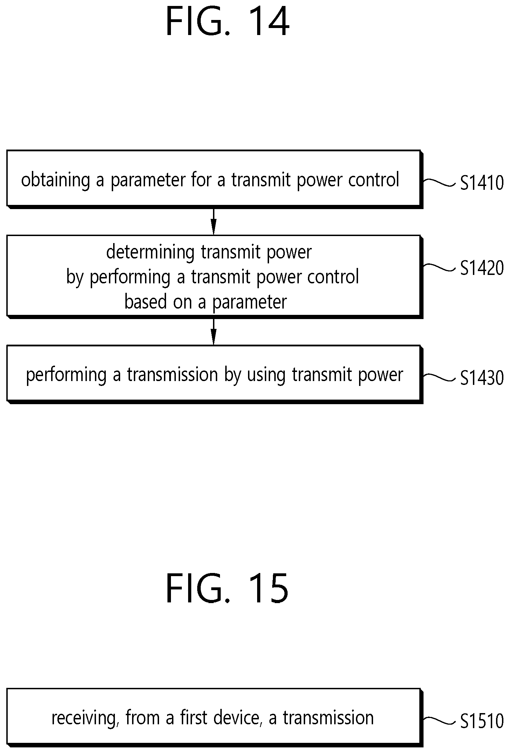

FIG. 14 shows a procedure of a method which may be performed by a first device according to an embodiment of the present disclosure. The embodiment of FIG. 14 may be combined with various embodiments of the present disclosure.

Referring to FIG. 14, in step S1410, a first device may obtain a parameter for a transmit power control. In step S1420, the first device may determine transmit power by performing the transmit power control based on the parameter. In step S1430, the first device may perform a transmission by using the transmit power. For example, the parameter may be determined based on an altitude of the first device.

For example, the parameter may be determined based on the altitude of the first device and a beam direction related to the transmission.

For example, the transmit power control may include a determination operation for a determination scheme of a sounding reference signal resource, and the determination scheme of the sounding reference signal resource may be determined differently per altitude of the first device.

For example, the transmit power control may include a determination operation for an open-loop power control formula to be applied, and the open-loop power control formula may be determined differently per altitude of the first device.

For example, additionally, the first device may receive, from a base station, information for the transmit power control. For example, the transmit power control may be performed based on the parameter and the information for the transmit power control.

For example, the information for the transmit power control may include information related to whether the transmit power control may be performed per altitude of the first device.

For example, the information for the transmit power control may include identification information for a transmit power control scheme related to the transmit power control.

For example, additionally, the first device may determine a transmit power control scheme to apply, based on the altitude of the first device and the identification information. For example, the transmit power control may be performed based on the determined transmit power control scheme.

For example, the first device may be a device capable of moving vertically.

For example, the transmit power control may include a power control scheme based on a measurement for multiple pathlosses.

For example, a maximum transmit power of the first device may be different per altitude of the first device.

For example, the transmit power control may comprise: receiving, from a base station, interference information per altitude; and determining the transmit power based on the parameter and the interference information per altitude.

The above-described embodiments may be applied to various devices described below. First, a processor 102 of a first device 100 may obtain a parameter for a transmit power control. And, the processor 102 of the first device 100 may determine transmit power by performing the transmit power control based on the parameter. And, the processor 102 of the first device 100 may perform a transmission by using the transmit power. For example, the parameter may be determined based on an altitude of the first device 100.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain a parameter for a transmit power control; determine transmit power by performing the transmit power control based on the parameter; and perform a transmission by using the transmit power, wherein the parameter may be determined based on an altitude of the first device.

For example, the parameter may be determined based on the altitude of the first device and a beam direction related to the transmission.

For example, the transmit power control may include a determination operation for a determination scheme of a sounding reference signal resource, and the determination scheme of the sounding reference signal resource may be determined differently per altitude of the first device.

For example, the transmit power control may include a determination operation for an open-loop power control formula to be applied, and the open-loop power control formula may be determined differently per altitude of the first device.

For example, additionally, the instructions may cause the first device to receive, from a base station, information for the transmit power control. For example, the transmit power control may be performed based on the parameter and the information for the transmit power control.

For example, the information for the transmit power control may include information related to whether the transmit power control may be performed per altitude of the first device.

For example, the information for the transmit power control may include identification information for a transmit power control scheme related to the transmit power control.

For example, additionally, the instructions may cause the first device to determine a transmit power control scheme to apply, based on the altitude of the first device and the identification information. For example, the transmit power control may be performed based on the determined transmit power control scheme.

For example, the first device may be a device capable of moving vertically.

For example, the transmit power control may include a power control scheme based on a measurement for multiple pathlosses.

For example, a maximum transmit power of the first device may be different per altitude of the first device.

For example, the transmit power control may comprise: receiving, from a base station, interference information per altitude; and determining the transmit power based on the parameter and the interference information per altitude.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: obtain a parameter for a transmit power control; determine transmit power by performing the transmit power control based on the parameter; and perform a transmission by using the transmit power, wherein the parameter may be determined based on an altitude of the first device.

According to an embodiment of the present disclosure, a non-transitory computer-readable storage medium storing instructions may be proposed. For example, the instructions, when executed, may cause a first device to: obtain a parameter for a transmit power control; determine transmit power by performing the transmit power control based on the parameter; and perform a transmission by using the transmit power, wherein the parameter may be determined based on an altitude of the first device.

FIG. 15 shows a procedure of a method which may be performed by a second device according to an embodiment of the present disclosure. The embodiment of FIG. 15 may be combined with various embodiments of the present disclosure.

Referring to FIG. 15, in step S1510, a second device may receive, from a first device, a transmission. For example, the transmission may be transmitted based on transmit power determined by performing a transmit power control performed based on a parameter, and the parameter may be determined based on an altitude of the first device.

For example, the parameter may be determined based on the altitude of the first device and a beam direction related to the transmission.

The above-described embodiments may be applied to various devices described below. First, a processor 202 of a second device 200 may control a transceiver 206 to receive, from a first device 100, a transmission. For example, the transmission may be transmitted based on transmit power determined by performing a transmit power control performed based on a parameter, and the parameter may be determined based on an altitude of the first device 100.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, a transmission, wherein the transmission may be transmitted based on transmit power determined by performing a transmit power control performed based on a parameter, and wherein the parameter may be determined based on an altitude of the first device.

For example, the parameter may be determined based on the altitude of the first device and a beam direction related to the transmission.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

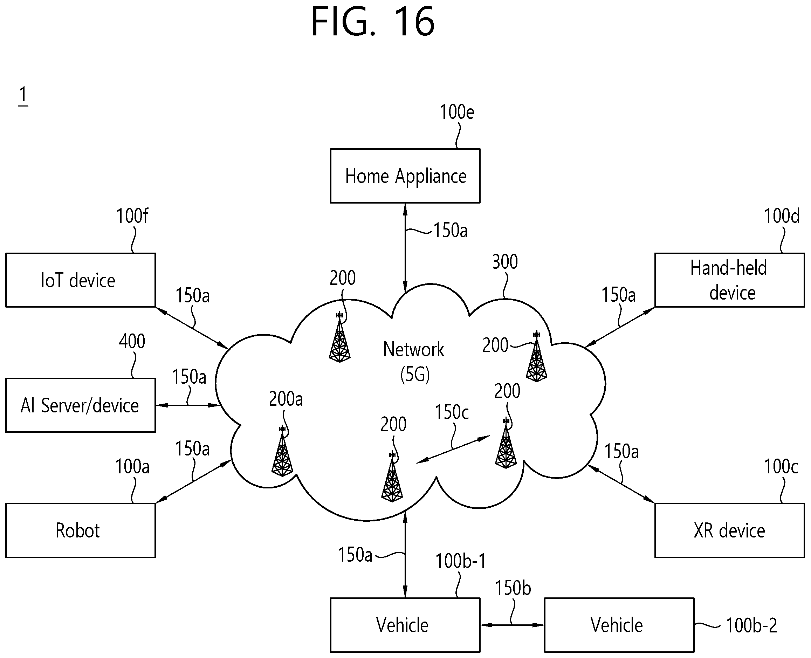

FIG. 16 shows a communication system 1, based on an embodiment of the present disclosure. The embodiment of FIG. 16 may be combined with various embodiments of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

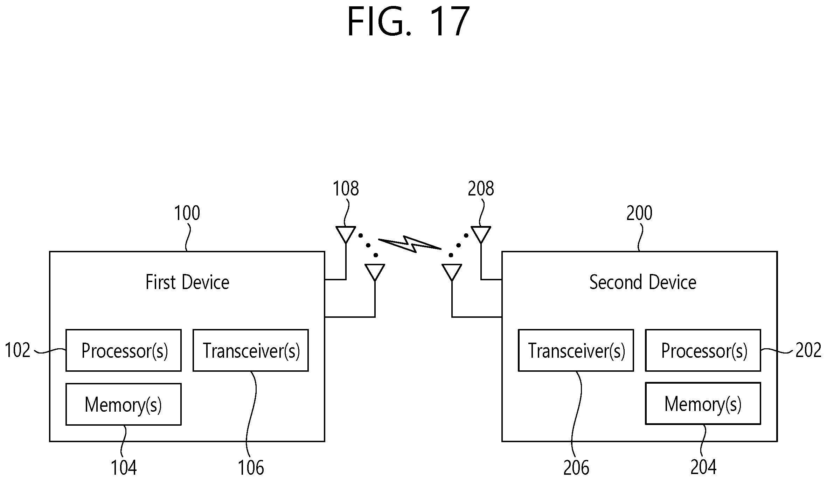

FIG. 17 shows wireless devices, based on an embodiment of the present disclosure. The embodiment of FIG. 17 may be combined with various embodiments of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

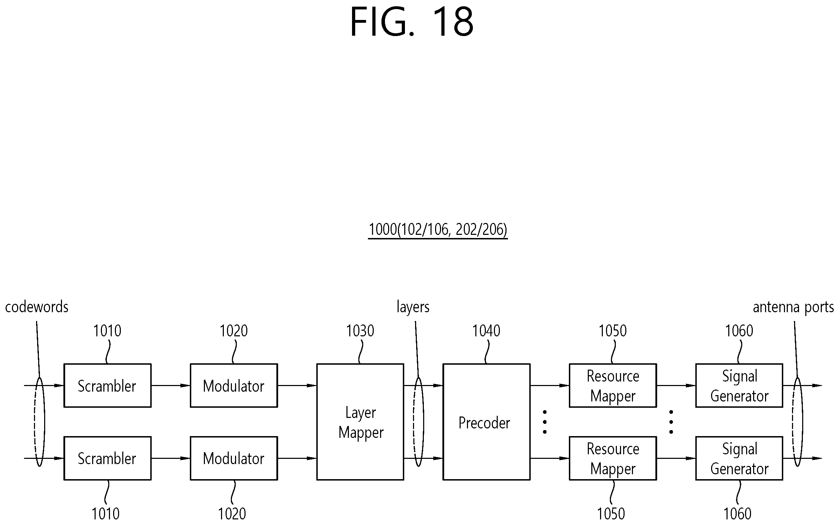

FIG. 18 shows a signal process circuit for a transmission signal, based on an embodiment of the present disclosure. The embodiment of FIG. 18 may be combined with various embodiments of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

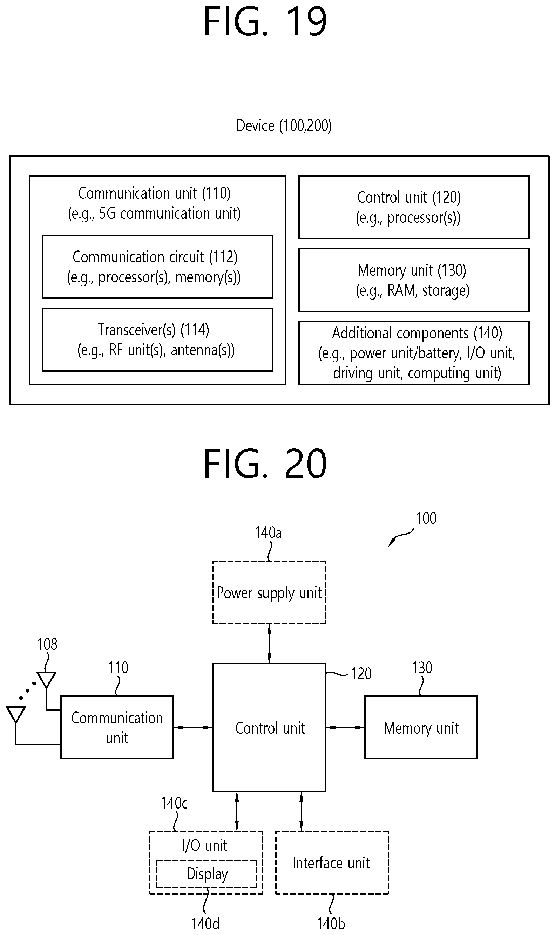

FIG. 19 shows another example of a wireless device, based on an embodiment of the present disclosure. The wireless device may be implemented in various forms according to a use-case/service (refer to FIG. 16). The embodiment of FIG. 19 may be combined with various embodiments of the present disclosure.

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 20 may be combined with various embodiments of the present disclosure.

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

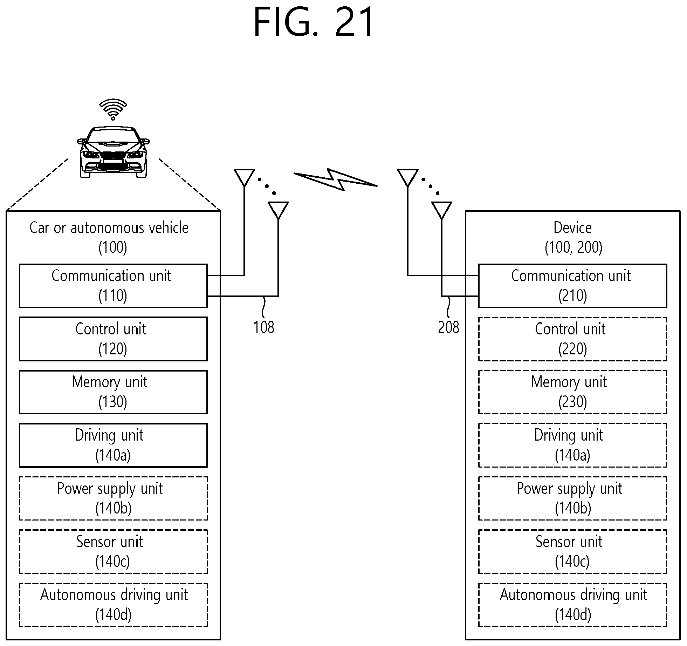

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 21 may be combined with various embodiments of the present disclosure.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
obtaining a parameter for a transmit power control;
determining transmit power by performing the transmit power control based on the parameter; and
performing a transmission by using the transmit power,
wherein the parameter is determined based on an altitude of a first device.

2. The method of claim 1, wherein the parameter is determined based on the altitude of the first device and a beam direction related to the transmission.

3. The method of claim 1, wherein the transmit power control includes a determination operation for a determination scheme of a sounding reference signal resource, and
wherein the determination scheme of the sounding reference signal resource is determined differently per altitude of the first device.

4. The method of claim 1, wherein the transmit power control includes a determination operation for an open-loop power control formula to be applied, and
wherein the open-loop power control formula is determined differently per altitude of the first device.

5. The method of claim 1, further comprising:
receiving, from a base station, information for the transmit power control,
wherein the transmit power control is performed based on the parameter and the information for the transmit power control.

6. The method of claim 5, wherein the information for the transmit power control includes information related to whether the transmit power control is performed per altitude of the first device.

7. The method of claim 5, wherein the information for the transmit power control includes identification information for a transmit power control scheme related to the transmit power control.

8. The method of claim 7, further comprising:
determining a transmit power control scheme to apply, based on the altitude of the first device and the identification information,
wherein the transmit power control is performed based on the determined transmit power control scheme.

9. The method of claim 1, wherein the first device is a device capable of moving vertically.

10. The method of claim 1, wherein the transmit power control includes a power control scheme based on a measurement for multiple pathlosses.

11. The method of claim 1, wherein a maximum transmit power of the first device is different per altitude of the first device.

12. The method of claim 1, wherein the transmit power control comprises:
receiving, from a base station, interference information per altitude; and
determining the transmit power based on the parameter and the interference information per altitude.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
obtain a parameter for a transmit power control;
determine transmit power by performing the transmit power control based on the parameter; and
perform a transmission by using the transmit power,
wherein the parameter is determined based on an altitude of the first device.

15. A processing device adapted to control a first device, the processing device comprising:
at least one processor; and
at least one memory connected to the at least one processor and storing instructions,
wherein the instructions, based on being executed by the at least one processor, cause the first device to:
obtain a parameter for a transmit power control;
determine transmit power by performing the transmit power control based on the parameter; and
perform a transmission by using the transmit power,
wherein the parameter is determined based on an altitude of the first device.

16. A non-transitory computer-readable storage medium storing instructions that, when executed, cause a first device to:
obtain a parameter for a transmit power control;
determine transmit power by performing the transmit power control based on the parameter; and
perform a transmission by using the transmit power,
wherein the parameter is determined based on an altitude of the first device.

17. A method comprising:
receiving, from a first device, a transmission,
wherein the transmission is transmitted based on transmit power determined by performing a transmit power control performed based on a parameter, and
wherein the parameter is determined based on an altitude of the first device.

18. The method of claim 17, wherein the parameter is determined based on the altitude of the first device and a beam direction related to the transmission.

19. A second device comprising:
at least one transceiver;
at least one processor; and
at least one memory connected to the at least one processor and storing instructions,
wherein the instructions, based on being executed by the at least one processor, cause the second device to:
receive, from a first device, a transmission,
wherein the transmission is transmitted based on transmit power determined by performing a transmit power control performed based on a parameter, and
wherein the parameter is determined based on an altitude of the first device.

20. The second device of claim 19, wherein the parameter is determined based on the altitude of the first device and a beam direction related to the transmission.
